# EUROPÄISCHE PATENTSCHRIFT

(11) **EP 2 771 207 B1**
(45) Veröffentlichungstag und Bekanntmachung des Hinweises auf die Patenterteilung: **30.03.2016**
(21) Anmeldenummer: 11776187.4
(22) Anmeldetag: 28.10.2011
(51) Int. Cl.: B60P 3/07, B60P 3/12, B60P 3/42, B62D 53/04

(54) **TRANSPORTKONZEPT**
TRANSPORT CONCEPT
CONCEPT DE TRANSPORT

(43) Veröffentlichungstag der Anmeldung: 03.09.2014
(73) Patentinhaber: Biberger, Florian, 84061 Ergoldsbach (DE)
(72) Erfinder: Biberger, Florian, 84061 Ergoldsbach (DE)
(74) Vertreter: Patentanwaltskanzlei WILHELM & BECK
(86) Internationale Anmeldenummer: PCT/EP2011/068998
(87) Internationale Veröffentlichungsnummer: WO 2013/060383

(56) Entgegenhaltungen:
- EP-A2- 1 927 505
- WO-A2-2005/054090
- CH-A5- 608 218
- DE-A1- 2 519 272
- US-A1- 2006 269 379

## Beschreibung

Die Erfindung betrifft einen Aufbau für ein Nutzfahrzeug. Insbesondere betrifft die Erfindung einen Aufbau für ein Nutzfahrzeug zur Befestigung eines weiteren Nutzfahrzeugs. Ferner betrifft die Erfindung ein Verfahren zum Transportieren zweier Zugfahrzeuge und zweier Anhänger.

Beim Transport von Gütern mittels Lastkraftwagen ist man bemüht, Leerfahrten zu vermeiden. Beim so genannten unpaarigen Verkehr werden Güter vorwiegend oder vollständig in nur einer Richtung befördert, so dass bis zu 50% der Fahrten eines befördernden Lastkraftwagens Leerfahrten sind. Soll beispielsweise eine größere Anzahl Baumstämme von einem Wald in ein entferntes Sägewerk transportiert werden, so muss ein Lastkraftwagen mehrmals hin- und herfahren, wobei bei den Fahrten vom Sägewerk zum Wald keine Ladung zu befördern ist.

Um Leerfahrten zu reduzieren, wird in EP 1 029 737 A1 vorgeschlagen, zwei Zugmaschinen mit zugeordneten Sattelaufliegern für den Transport zu verwenden und bei Wegen, auf denen keine Ladung zu befördern ist, eine der Zugmaschinen mit dem ihr zugeordneten Sattelauflieger auf den Sattelauflieger der anderen Zugmaschine aufzuladen.

Eine derartige Kombination erreicht bei üblichen Abmessungen der Zugmaschinen und Sattelauflieger eine Gesamthöhe von mehr als 4 m, so dass deren Transport in vielen Ländern nur unter Auflagen oder gar nicht zulässig ist. Zudem ist zum Aufladen des einen Sattelzugs auf den anderen vor Ort eine Infrastruktur in Form einer Ladrampe oder eines Krans erforderlich.

CH 608 218 A5 betrifft einen Lastkraftwagen mit einem Aufbau, um alternativ einen Container oder ein anderes Fahrzeug zu transportieren.

DE 25 19 272 A1 geht von einem Fahrzeug mit einem Fahrgestell aus, das mittels eines anderen Fahrzeugs transportiert oder überführt werden soll. Es wird vorgeschlagen, auf dem Fahrgestell des zu transportierenden Fahrzeugs eine Vorrichtung anzubringen, um darauf stückiges Transportgut zu befördern.

Der Erfindung liegt daher die Aufgabe zugrunde, eine Technik zur Vermeidung von Leerfahrten im Gütertransport anzugeben, die unter realistischen Bedingungen handhabbar ist.

Die Erfindung löst dieses Problem durch einen Aufbau für ein Nutzfahrzeug mit den Merkmalen von Anspruch 1 und ein Verfahren mit den Merkmalen von Anspruch 9. Unteransprüche geben bevorzugte Ausführungsformen wider.

### Offenbarung der Erfindung

Ein Aufbau zur Anbringung an einem Fahrgestell eines ersten Nutzfahrzeugs umfasst einerseits eine Verriegelungseinrichtung zur Befestigung eines auswechselbaren Ladungsträgers am Aufbau und andererseits eine Aufnahme zur Befestigung eines zweiten Nutzfahrzeugs am Aufbau.

Die Nutzfahrzeuge verfügen insbesondere ein Fahrgestell mit einem Leiterrahmen. Die Nutzfahrzeuge können insbesondere einen Lastkraftwagen mit Ladepritsche und/oder einen Anhänger für einen Lastkraftwagen umfassen. In einer anderen Ausführungsform können die Nutzfahrzeuge einen Sattelschlepper und/oder einen Auflieger für einen Sattelschlepper umfassen. Die genannten Nutzfahrzeuge können in beliebigen Kombinationen für die Erfindung verwendet werden.

Dadurch ist es möglich, mit dem ersten Nutzfahrzeug alternativ einen Transport von gewöhnlichen Gütern, die beispielsweise in einem ISO-Container oder auf einer Wechselbrücke verstaut sind, oder einen Transport des zweiten Nutzfahrzeugs durchzuführen. Eine Leerfahrt des zweiten Nutzfahrzeugs kann somit eingespart werden, wodurch Betriebskosten verringert werden können. Zu den einsparbaren Betriebskosten zählen etwa Treibstoff und andere Betriebsstoffe, Verschleiß, Maut und gegebenenfalls auch Personalkosten. Ein Personal, das das zweite Nutzfahrzeug ansonsten auf dessen eigener Achse bewegt hätte, kann beispielsweise auf dem ersten Nutzfahrzeug mitreisen, wobei die Reisezeit für dieses Personal als Ruhezeit angerechnet werden kann.

Die Verriegelungseinrichtungen umfassen bevorzugterweise eine Eckverriegelung, besser bekannt unter der Bezeichnung Twistlock, zur Befestigung eines ISO-Containers oder eines Wechselbehälters. Dadurch kann eine große Vielfalt genormter Ladungsträger bzw. Ladungsbehälter auf dem Aufbau befördert werden. Zum Transport des zweiten Nutzfahrzeugs oder zur Befestigung unter schiedlicher Ladungsträger können die Eckverriegelungen einzeln versenkbar sein.

Der Aufbau kann eine rechte und eine linke Rollbahn in Fahrtrichtung zum Abstützen von Rädern an einer Achse des zweiten Nutzfahrzeugs beim Auffahren auf das erste Nutzfahrzeug umfassen. Die Rollbahnen können Teil einer Auflagefläche für die Ladungsträger bzw. Ladungsbehälter sein und erlauben es, das zweite Nutzfahrzeug aus eigener Kraft auf das erste Nutzfahrzeug auf- bzw. von diesem abzuladen.

Die Aufnahme zur Befestigung des zweiten Nutzfahrzeugs am Aufbau kann Vertiefungen zur Aufnahme von Einzelreifen einer Achse des zweiten Nutzfahrzeugs umfassen.

Die Vertiefung kann das zweite Nutzfahrzeug gegen Wegrollen in und gegen die Fahrtrichtung sichern. Weitere Befestigüngseinrichtungen im Bereich der aufgenommenen Räder des zweiten Nutzfahrzeugs, wie Keile oder eine Verzurrung, können für die Sicherung nicht erforderlich sein. Die Vertiefung kann ferner dazu beitragen, dass die Gesamthöhe der beiden aufeinander aufgeladenen Nutzfahrzeuge reduziert ist. Das zweite Nutzfahrzeug kann im Bereich einer Vorderachse eine größere Höhe als im Bereich einer Hinterachse aufweisen und die Vertiefung kann zur Aufnahme von Rädern der Vorderachse des zweiten Nutzfahrzeugs ausgebildet sein, so dass die Gesamthöhe der beiden aufeinander aufgeladenen Nutzfahrzeuge reduziert ist. Das zweite Nutzfahrzeug kann dabei auf dem ersten Nutzfahrzeug eine kopflastige Position einnehmen.

Jede Rollbahn kann in Fahrtrichtung in eine innere Rollbahn, die der Fahrzeugmitte zugewandt ist, und eine äußere Rollbahn, die der Fahrzeugmitte abgewandt ist, unterteilt sein. Dabei liegen wobei die Vertiefungen in den äußeren Rollbahnen, so dass Einzelreifen des zweiten Nutzfahrzeugs in die Vertiefungen eintreten können, während Zwillingsreifen des zweiten Nutzfahrzeugs im Bereich der Vertiefungen durch die inneren Rollbahnen abgestützt sind.

Weist das zweite Nutzfahrzeug beispielsweise nur an einer Hinterachse eine Zwillingsbereifung auf, so können die Räder der Hinterachse im Bereich der Vertiefungen über die inneren Rollbahnen rollen, ohne in die Vertiefungen einzurasten, während die Räder der Vorderachse auf den äußeren Rollbahnen laufen und in die Vertiefungen einrasten. Dabei ist ein erster Innenabstand zwischen Rädern der Hinterachse größer als ein zweiter Innenabstand zwischen Rädern der Vorderachse des zweiten Zugfahrzeugs. Vorzugsweise ist die Vertiefung im hinteren Bereich des ersten Nutzfahrzeugs angebracht, so dass das zweite Nutzfahrzeug entgegen der Fahrtrichtung des ersten Nutzfahrzeugs ausgerichtet ist, um ein Auf- bzw. Abladen des zweiten Nutzfahrzeugs über eine hintere Ladekante des ersten Nutzfahrzeugs zu erleichtern.

Dabei ist die Vertiefung vorzugsweise derart bemessen, dass eine Gesamthöhe der beiden aufeinander geladenen Nutzfahrzeuge eine vorbestimmte Gesamthöhe nicht übersteigt, so lange das zweite Nutzfahrzeug eine vorbestimmte Maximalhöhe nicht übersteigt. Die Gesamthöhe kann beispielsweise 4 m für den Transport im europäischen, insbesondere deutschen, Straßenverkehrsnetz betragen. Auf diese Weise können geltende gesetzliche Vorgaben erfüllt werden, so dass das Verfahren nicht nur theoretisch sondern auch kommerziell anwendbar sein kann.

Der Aufbau kann ferner eine Seilwinde zum Ziehen des zweiten Nutzfahrzeugs auf den Aufbau umfassen. Dadurch kann ein Aufladen des zweiten Nutzfahrzeugs auf das erste Nutzfahrzeug auch ohne eine externe Einrichtung wie eine fest installierte Laderampe oder einen Kran erleichtert sein.

Es kann ferner ein seitlicher Unterfahrschutz vorgesehen sein, der dazu eingerichtet ist, vom Aufbau abgenommen und als Rampenelement zum Abstützen von Rädern des zweiten Nutzfahrzeugs in einem Bereich zwischen dem ersten Nutzfahrzeug und einer Umgebung verwendet zu werden, um ein Auffahren des zweiten Nutzfahrzeugs auf das erste Nutzfahrzeug zu erleichtern. Dadurch können ein Auf- und ein Abladen des zweiten Nutzfahrzeugs erleichtert sein, ohne eine externe Infrastruktur zu erfordern. Ein zusätzlicher Stauraum für ein herkömmliches Rampenelement ist nicht erforderlich.

Ein Verfahren zum Transportieren eines ersten Zugfahrzeugs, eines ersten Anhängers, eines zweiten Zugfahrzeugs und eines zweiten Anhängers von einem Startort zu einem Zielort umfasst Schritte des Aufladens des zweiten Anhängers auf eines der Zugfahrzeuge oder den ersten Anhänger am Startort, des Aufladens des zweiten Zugfahrzeugs auf den ersten Anhänger am Startort und des Fahrens des ersten Zugfahrzeugs mit angehängtem erstem Anhänger vom Startort zum Zielort.

Zur Einsparung einer Leerfahrt des ersten Zugfahrzeugs und des ersten Anhängers können beide Nutzfahrzeuge auf dem zweiten Zugfahrzeug und dem zweiten Anhänger transportiert werden, wodurch die gesamten Fahrtkosten um bis zu 50% verringert werden können. Dabei können insbesondere der zweite Anhänger und/oder das zweite Zugfahrzeug den oben beschriebenen Aufbau umfassen.

In einer Ausführungsform ist jedem Anhänger jeweils eine Wechselbrücke zugeordnet, wobei das Verfahren ferner den Schritt des Aufladens der vier Wechselbrücken auf das erste Zugfahrzeug und/oder den ersten Anhänger am Startort umfasst. Das Verfahren kann auf diese Weise praxistauglich beispielsweise im Pendelverkehr zwischen dem Startort und dem Zielort verwendet werden.

### Kurze Beschreibung der Figuren:

Die Erfindung wird nun mit Bezug auf die beigefügten Figuren näher beschrieben, in denen:
- Fig. 1: eine Seitenansicht eines Aufbaus an einem Nutzfahrzeug;
- Fig. 2: Schnittansichten des Aufbaus von Fig. 1;
- Fig. 3: eine Seitenansicht eines Lastkraftwagens auf einem Anhänger;
- Fig. 4: eine Seitenansicht eines Lastkraftwagens auf einem anderen Lastkraftwagen;
- Fig. 5: eine Seitenansicht eines Lastkraftwagens auf einem Auflieger eines Sattelschleppers;
- Fig. 6: Schritte eines Verfahrens;
- Fig. 7: Schritte eines weiteren Verfahrens; und
- Fig. 8: Schritte noch eines zu den Verfahren der Figuren 6 und 7 korrespondierenden Verfahrens
darstellt.

### Genaue Beschreibung von Ausführungsbeispielen

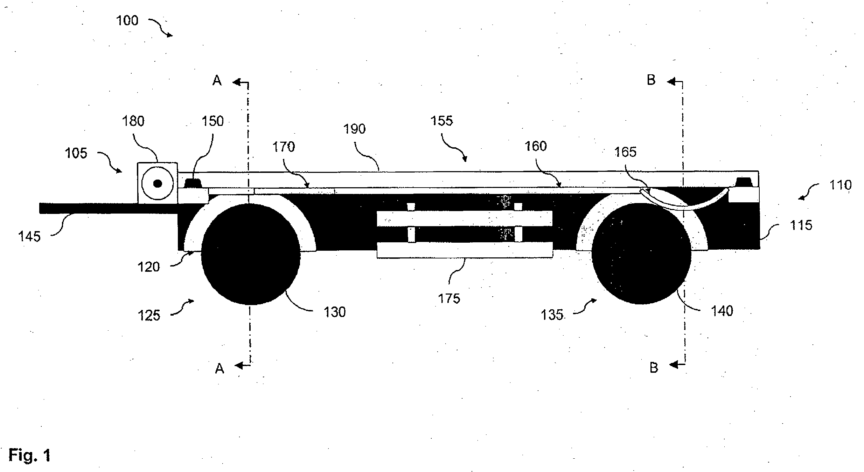

Figur 1 zeigt ein Nutzfahrzeug 100 mit einem Aufbau 105. Als beispielhafte Darstellung ist in Figur 1 als Nutzfahrzeug 100 ein Anhänger dargestellt. In anderen Ausführungsformen kann anstelle des Anhängers auch ein Lastkraftwagen oder ein Auflieger eines Sattelschleppers verwendet werden, der zum Transportieren von Ladung eingerichtet ist. Dabei umfasst der Aufbau 105 diejenigen Elemente, die das Fahrgestell des Nutzfahrzeugs 100 so ergänzen, dass ein auswechselbarer Ladungsträger, beispielsweise ein ISO-Container, eine Wechselbrücke oder ein Wechselbehälter, mittels des Nutzfahrzeugs 100 transportiert werden kann.

Ein Fahrgestell 110 des dargestellten Nutzfahrzeugs 100 umfasst einen Rahmen 115, eine Federung 120, eine Vorderachse 125 mit Vorderrädern 130 und eine Hinterachse 135 mit Rädern 140.

In unterschiedlichen Ausführungsformen des Nutzfahrzeugs 100 können unterschiedliche Anzahlen und relative Anordnungen von Vorderachsen 125 und Hinterachsen 135 mit zugehörigen Rädern 130 und 140 vorgesehen sein. Die Achsen 125, 135 werden mittels der Federung 120, die beispielsweise eine Blattfederung oder eine Faltenbalgfederung umfassen kann, am Rahmen 115 abgestützt. Der Rahmen 115 ist vorzugsweise ein Leiterrahmen, der wenigstens zwei in Fahrtrichtung verlaufende Längsholme sowie mehrere zwischen den Längsholmen verlaufende Querholme umfasst. Der dargestellte Anhänger 100 umfasst ferner eine Deichsel 145 zur Befestigung an einem Zugfahrzeug.

Der Aufbau 105 umfasst mehrere Verriegelungseinrichtungen 150 sowie eine Aufnahme 155 zur Anbringung eines weiteren Nutzfahrzeugs 100 am Aufbau 105. Jede Verriegelungseinrichtung 150 umfasst vorzugsweise einen Zapfen zur form- und kraftschlüssigen Verbindung eines Ladungsträgers 190. Die Verriegelungseinrichtungen 150 können insbesondere sogenannte Eckverriegelungen (Pilze, Twistlocks) sein. Der Ladungsträger 190 kann beispielsweise einen ISO-Container, eine Wechselbrücke, eine Wechselpritsche, einen Wechselkoffer oder einen anderen Wechselaufbau umfassen.

Die Aufnahme 155 des Aufbaus 105 ist dazu eingerichtet, an Stelle des Ladungsträgers 190 ein weiteres Nutzfahrzeug 100 am dargestellten Nutzfahrzeug 100 beziehungsweise am Rahmen 115 zu befestigen. Dazu umfasst die Aufnahme 155 vorzugsweise eine Rollbahn 160, in der an einer vorbestimmten Stelle eine Vertiefung 165 ausgebildet ist. Vorzugsweise erstreckt sich die Rollbahn 160 in Längsrichtung des dargestellten Nutzfahrzeugs 100, um ein Fahren beziehungsweise Rollen des zu transportierenden Nutzfahrzeugs 100 auf dem Aufbau 105 zu ermöglichen. Die Rollbahn 160 kann beispielsweise durch einen Abschnitt einer Ladefläche des Nutzfahrzeugs 100, durch einen Abschnitt eines am Rahmen 115 angebrachten Trägers oder durch einen Abschnitt eines Rahmenträger des Rahmens 115 gebildet sein.

Die Vertiefung 165 ist dazu eingerichtet, Räder einer Achse 125, 135 des zu transportierenden Nutzfahrzeugs 100 aufzunehmen. Vorzugsweise ist die Vertiefung 165 hinter der Hinterachse 135 des dargestellten Nutzfahrzeugs 100 angeordnet. Weiter vorzugsweise ist die Vertiefung 165 zur Aufnahme der Räder derjenigen Achse des zu transportierenden Nutzfahrzeugs 100 eingerichtet, in deren Bereich das zu transportierende Nutzfahrzeug 100 am höchsten ist. Die Gesamthöhe des dargestellten Nutzfahrzeugs 100 mit dem zu transportierenden Nutzfahrzeug 100 kann dadurch reduziert sein.

Die Räder der restlichen Achsen des zu transportierenden Nutzfahrzeugs 100 ruhen auf der Rollbahn 160. Für diese Räder kann ein Auflager 170 bereitgestellt sein, um die Position der Räder zu fixieren und eine Einleitung von Auflagerkräften in das Fahrgestell 110 zu unterstützen. Das Auflager 170 ist vorzugsweise im Bereich der Rollbahn 160 vorgesehen. In einer Ausführungsform ist das Auflager 170 ein Abschnitt einer geeigneten tragenden Struktur des Nutzfahrzeugs 100, vorzugsweise desjenigen tragenden Elements, das die Rollbahn 160 bildet. Das Auflager 170 kann beispielsweise einen aufgerauten, strukturierten oder perforierten Bereich in der Rollbahn 160 umfassen. Außerdem kann im Bereich des Auflagers 170 eine Befestigungseinrichtung zur Fixierung von Rädern des Nutzfahrzeugs 100 vorgesehen sein.

Optional umfasst der Aufbau 105 einen seitlichen Unterfahrschutz 175, der aus der dargestellten seitlichen Position entfernbar ist und als Rampenelement verwendet werden kann. Das Auf- bzw. Abladen des zu transportierenden Nutzfahrzeugs 100 auf den Aufbau 105 des dargestellten Nutzfahrzeugs 100 kann durch die Verwendung des Rampenelements 175 erleichtert sein. Das Rampenelement 175 ist insbesondere dazu eingerichtet, im Bereich eines hinteren Endes der Rollbahn 160 an den Aufbau 105 angelegt beziehungsweise mit diesem verbunden zu werden. Dazu kann eine entsprechende Verriegelungseinrichtung am Rampenelement 175 und am Rahmen 115 bzw. des Aufbaus 105 vorgesehen sein. In einer Ausführungsform ist das Rampenelement 175 aus einem Leichtmetall, beispielsweise Aluminium, gefertigt.

In einer bevorzugten Ausführungsform ist die Befestigung jedes Rampenelements 175 im Bereich der Verriegelungseinrichtung in einem vorbestimmten Bereich am Nutzfahrzeug 100 vertikal schwenkbar, so dass ein hinteres Ende des Rampenelements 175 um einen Betrag angehoben oder abgesenkt werden kann, ohne dass die Befestigung dadurch gelöst wird. Auf diese Weise kann jedes Rampenelement 175 in unterschiedlichen Winkeln am Nutzfahrzeug 100 befestigt werden, so dass die Rampenelemente 175 auch im Bereich einer Bodenunebenheit, einer Stufe oder eines Randsteins verwendet werden können, um beispielsweise beim Auffahren einen zu überwindenden Höhenunterschied zu verringern.

Weiter optional umfasst der Aufbau 105 eine Seilwinde 180, die vorzugsweise in einer von der Vertiefung 165 entfernten Längsposition am Aufbau 105 bzw. am Rahmen 115 befestigt ist. Die Seilwinde 180 ist dazu eingerichtet, das zu transportierende Nutzfahrzeug 100 auf das dargestellte Nutzfahrzeug 100 zu ziehen. Dadurch kann auch ein antriebsloses Nutzfahrzeug 100, wie beispielsweise ein weiterer Anhänger, erleichtert auf das dargestellte Nutzfahrzeug 100 aufgeladen werden.

Weitere für den Betrieb erforderliche Elemente des Nutzfahrzeugs 100, wie beispielsweise ein Drehschemel, eine elektrische Installation oder Bremsen, sind nicht dargestellt und werden hier nicht weiter erläutert.

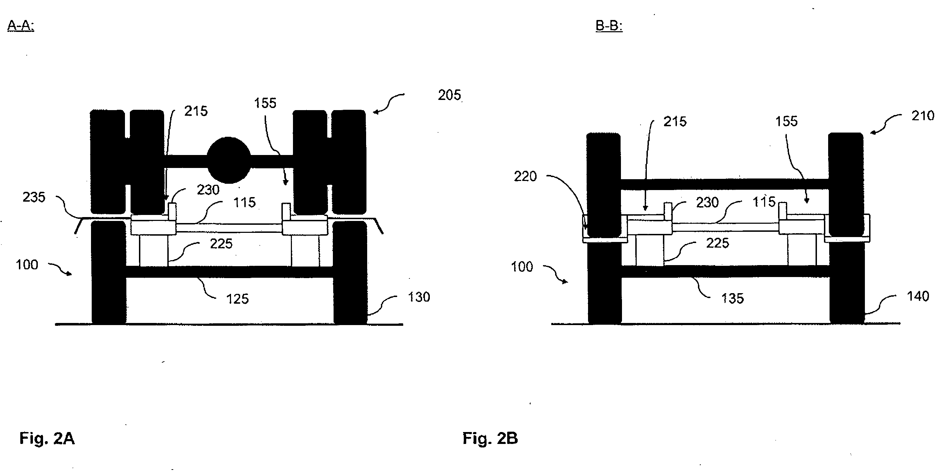

Figuren 2A und 2B zeigen Schnittansichten des Aufbaus 105 aus Figur 1 an dem dort dargestellten Nutzfahrzeug 100. Beide Schnitte verlaufen quer zur Fahrtrichtung des Nutzfahrzeugs 100, wobei die Darstellung von Figur 2A einem Schnitt entlang der Schnittlinie A-A in Figur 1 und die Darstellung von Figur 2B einem Schnitt entlang der Schnittlinie B-B in Figur 1 entspricht. Vom zu transportierenden Nutzfahrzeug 100 ist in Figur 2A eine Hinterachse 205 mit Rädern und in Figur 2B eine Vorderachse 210 mit Rädern dargestellt.

In den Figuren 2A und 2B ist erkennbar, wie eine Federung 235 des Nutzfahrzeugs 100 jeweils eine der Achsen 125 und 135 mit dem Rahmen 115 verbindet. Am Rahmen 115 ist ferner die Rollbahn 160 befestigt, die jeweils einmal für linke Räder und einmal für rechte Räder des zu transportierenden Nutzfahrzeugs 100 ausgeführt ist. In einer Ausführungsform kann ein Führungselement 230 an der Rollbahn 160 angebracht sein, welches ein seitliches Abrutschen eines Rades des zu transportierenden Kraftfahrzeugs von der Rollbahn 160 verhindert.

In der dargestellten, bevorzugten Ausführungsform ist die Aufnahme 155 bzw. die Rollbahn 160 dazu eingerichtet, ein weiteres Nutzfahrzeug 100 aufzunehmen, das eine Vorderachse 125 mit Einzelbereifung und eine Hinterachse 135 mit Zwillingsbereifung oder Super-Single-Bereifung umfasst, wobei die äußeren Reifen der Zwillingsbereifung im Wesentlichen auf den gleichen Spuren wie die korrespondierenden Vorderreifen bzw. Vorderräder liegen. Die Räder 130 bzw. 140 des tragenden Nutzfahrzeugs 100 weisen im Wesentlichen die gleiche Spurbreite wie die Vorderräder des zu tragenden Nutzfahrzeugs 100 auf.

Die Rollbahnen 160 auf jeder Seite des unteren Nutzfahrzeugs 100 sind in innere Rollbahnen 215 und äußere Rollbahnen 220 aufgeteilt. Dabei liegen die Räder der Vorderachse 210 des zu transportierenden Nutzfahrzeugs 100 auf den äußeren Rollbahnen, während von den Zwillingsreifen der Hinterachse 205 nur die inneren Kontakt zur Rollbahn 160, nämlich zur inneren Rollbahn 215 haben. Die Vertiefungen 165 sind in den äußeren Rollbahnen ausgebildet und liegen, wie in Figur 1 angedeutet ist, vor oder hinter einer Achse 125,135 des unteren Nutzfahrzeugs 100.

Rollt oder fährt das obere Nutzfahrzeug 100 auf das untere Nutzfahrzeug 100, so laufen die Zwillingsreifen der Hinterachse 205 auf den inneren Rollbahnen 160, die mit einer Ladefläche zur Aufnahme des auswechselbaren Ladungsträgers 190 fluchten. Die Räder der Vorderachse 210 laufen auf den äußeren Rollbahnen 220 und können in den Vertiefungen 165 in den äußeren Rollbahnen 220 aufgenommen werden. So kann das obere Nutzfahrzeug 100 rückwärts und gegen die übliche Fahrtrichtung des unteren Nutzfahrzeugs 100 auf dieses aufgenommen und gesichert werden. Ein Abladen erfolgt in entsprechender Weise.

In einer anderen Ausführungsform sind die Vertiefungen 165 im vorderen Bereich und die Auflager 170 im hinteren Bereich des Nutzfahrzeugs 100 angeordnet. In diesem Fall rollt oder fährt das obere Nutzfahrzeug 100 bevorzugterweise so auf das untere Nutzfahrzeug 100, dass die Fahrtrichtungen beider Fahrzeuge gleich sind.

Die äußeren Rollbahnen 220 sind von den Vertiefungen 165 aus in Längsrichtung des unteren Nutzfahrzeugs 100 vorzugsweise nur nach hinten weitergeführt, da es nicht vorgesehen ist, dass die Räder der Vorderachse 210 in eine Position vor den Vertiefungen 165 gelangen. Da die Vertiefungen 165 bezüglich Achsen 125, 135 des unteren Nutzfahrzeugs 100 versetzt sind, können die Räder der Vorderachse 210 des oberen Nutzfahrzeugs 100, die in die Vertiefungen 165 einrasten, die Räder 130,140 des unteren Nutzfahrzeugs 100 hinterschneiden.

Die inneren Rollbahnen 215 müssen im Bereich der äußeren Zwillingsreifen der Hinterachse 205 des oberen Nutzfahrzeugs 100 nicht ausgebildet sein, so dass die Oberkanten der inneren Rollbahnen 215 nur knapp über den Oberkanten der Räder 130,140 liegen muss. Ein Zwischenraum kann durch einen Kotflügel 235 des unteren Nutzfahrzeugs 100 genutzt werden, da der Kotflügel 235 keine Stützkräfte des oberen Nutzfahrzeugs 100 aufnehmen muss.

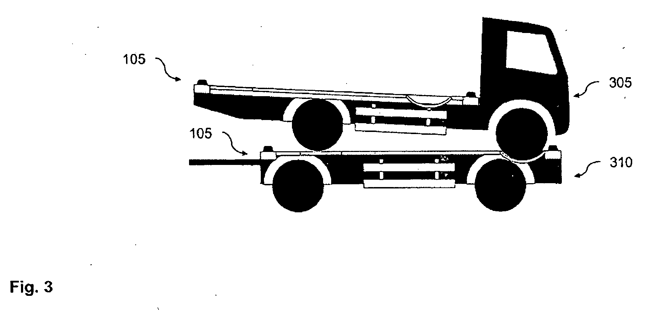

Figur 3 zeigt eine Seitenansicht eines Lastkraftwagens 305 auf einem Anhänger 310. Sowohl der Lastkraftwagen 305 als auch der Anhänger 310 sind Nutzfahrzeuge 100 in dem oben mit Bezug auf Figur 1 genannten Sinn. In der Darstellung von Figur 3 trägt sowohl der Lastkraftwagen 305 als auch der Anhänger 310 jeweils einen Aufbau 105. An Stelle des oberen Lastkraftwagens 305 kann auch beispielsweise ein Anhänger 100 entsprechend dem von Figur 1 verwendet werden. Das obere Nutzfahrzeug 100 muss nicht unbedingt mit dem Aufbau 105 ausgerüstet sein.

Der Lastkraftwagen 305 ist in der oben mit Bezug auf die Figuren 1 und 2 beschriebenen Weise auf dem Anhänger 310 angebracht. Dabei ist der Aufbau 105 und insbesondere die Position der Vertiefung 165 des Anhängers 310 so auf den Lastkraftwagen 305 abgestimmt, dass der Anhänger 310 von einer Zugmaschine wie beispielsweise einem weiteren Lastkraftwagen 305 gezogen werden kann, ohne dass der dargestellte, obere Lastkraftwagen 305 mit dem ziehenden Lastkraftwagen kollidiert. Dies kann für einen Transport des Lastkraftwagens 305 in oder gegen die Fahrtrichtung des Anhängers 310 gelten.

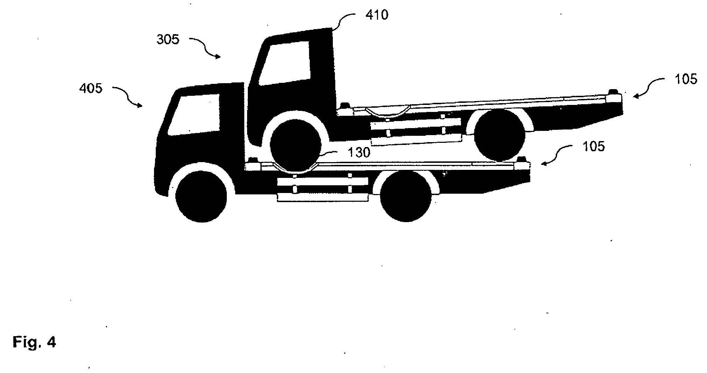

Figur 4 zeigt eine Seitenansicht eines Lastkraftwagens 305 aus Figur 3 auf einem weiteren Lastkraftwagen 405, der einen Aufbau 105 trägt. An Stelle des oberen Lastkraftwagens 305 kann auch ein anderes Nutzfahrzeug 100 verwendet werden. Der Aufbau 105 ist nur am unteren Lastkraftwagen 405 erforderlich. Der Aufbau 105 des Lastkraftwagens 405 ist zum Aufbau 105 des Lastkraftwagens 305 gegensätzlich orientiert, indem die Vertiefung 165 in Fahrtrichtung vorne angeordnet ist. Der Lastkraftwagen 305 liegt mit seinen Vorderrädern 130 in der Vertiefung 165 des Aufbaus 105 des Lastkraftwagens 405.

Eine Gesamthöhe der beiden Lastkraftwagen 305, 405 ist maßgeblich durch die Höhe der Fahrerkabine 410 des Lastkraftwagens 405 bestimmt. Die Fahrerkabine 410 ist im Bereich der Vorderräder 130 des oberen Lastkraftwagens 405 angeordnet, die in der Vertiefung 165 des Lastkraftwagens 405 aufgenommen sind, wodurch die Gesamthöhe reduziert ist. Insbesondere kann die Gesamthöhe der Lastkraftwagen 305, 405 dadurch unterhalb eines vorbestimmten Schwellenwerts bleiben. Dieser Schwellenwert kann beispielsweise 4 Meter betragen und aus verkehrsrechtlichen Gründen vorgegeben sein.

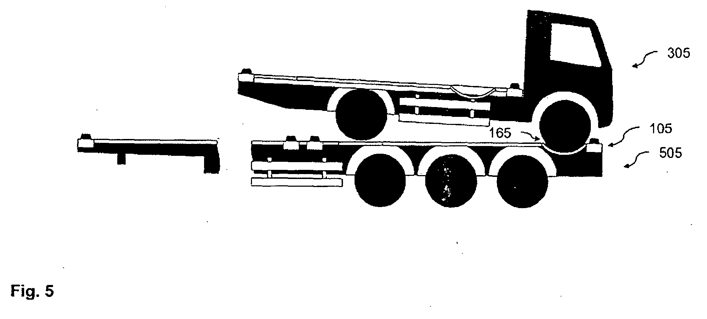

Figur 5 zeigt eine Seitenansicht eines Lastkraftwagens 305 auf einem Auflieger 505 eines Sattelschleppers. Ähnlich wie bei den Darstellungen der Figuren 3 und 4 kann an Stelle des Lastkraftwagens 305 auch ein anderes Nutzfahrzeug 100 verwendet werden, der Aufbau 105 am oberen Nutzfahrzeug 100 ist optional. Der Auflieger 505 trägt einen Aufbau 105, dessen Vertiefung 165 ähnlich wie beim Anhänger von Figur 1 hinter der letzten Hinterachse 135 des unteren Nutzfahrzeugs angeordnet ist. Die Ladefläche des Aufliegers 505 kann ausreichend groß sein, um zusätzlich zum Lastkraftwagen 305 oder eines anderen Nutzfahrzeugs 100 noch weitere Ladung, etwa einen Ladungsträger 190 und/oder ein weiteres Nutzfahrzeug 100, zu transportieren.

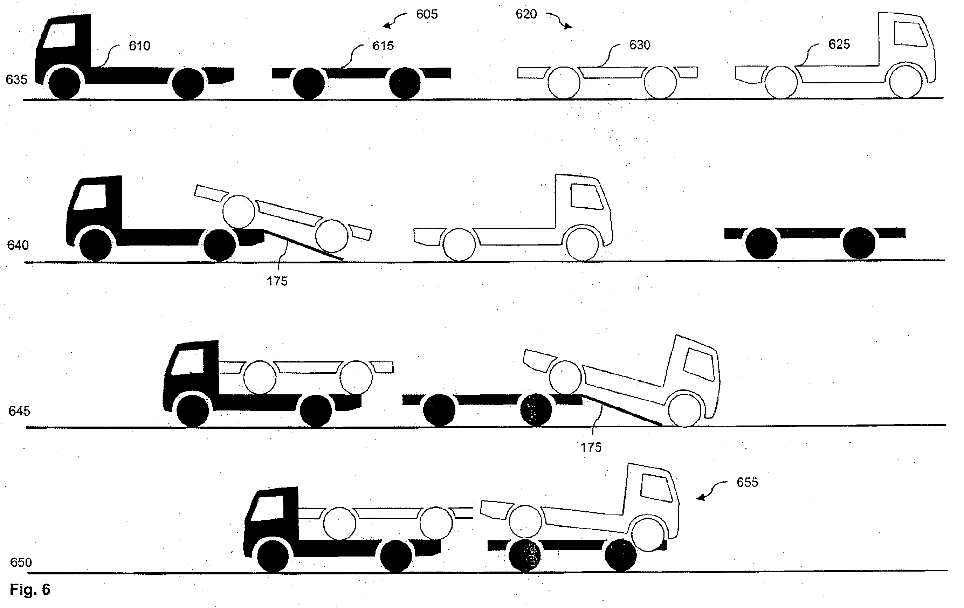

Figur 6 zeigt eine symbolische Darstellung von Schritten eines ersten Verfahrens 600 zum Transportieren zweier Lastzüge.

Ein erster Lastzug 605 ist dunkel dargestellt und umfasst einen ersten Lastkraftwagen 610 und einen ersten Anhänger 615. Ein zweiter Lastzug 620 ist hell dargestellt und umfasst einen zweiten Lastkraftwagen 625 und einen zweiten Anhänger 630. Zur Durchführung des Verfahrens 600 wird davon ausgegangen, dass wenigstens der erste Anhänger 615 so ausgebildet ist wie der Anhänger 100 der Figuren 1 bis 5. In entsprechender Weise kann das Verfahren 600 auch mit den in den Figuren 3 bis 5 dargestellten bzw. mit Bezug auf diese Figuren beschriebenen Kombinationen von Nutzfahrzeugen 100 durchgeführt werden.

Die dargestellten Lastzüge 605 und 620 stehen an einem Startort bereit. Es wird davon ausgegangen, dass die Nutzfahrzeuge 100, die am Ende des Verfahrens 600 andere Nutzfahrzeuge 100 tragen, jeweils einen Aufbau 105 umfassen und dass zur Durchführung des Verfahrens 600 keine weitere Ladung an den Aufbauten 105 angebracht ist.

In einem ersten Schritt 635 ist der zweite Anhänger 630 an den zweiten Lastkraftwagen 625 und der erste Anhänger 615 an den ersten Lastkraftwagen 610 gekoppelt. Dies entspricht einer fahrbereiten Konstellation für beide Lastzüge 605, 620, wobei vorzugsweise keiner der Lastzüge 605, 620 eine Ladung trägt.

In einem folgenden Schritt 640 wird zunächst der erste Anhänger 615 vom ersten Lastkraftwagen 610 abgekoppelt und beiseite gestellt. Dann wird der zweite Anhänger 630 auf den ersten Lastkraftwagen 610 aufgeladen. Eine Orientierung des zweiten Anhängers 630 auf dem ersten Lastkraftwagen 610 ist beliebig. Zum Aufladen kann der zweite Lastkraftwagen 625 den angekoppelten zweiten Anhänger 630 auf den ersten Lastkraftwagen 610 schieben. Das Aufladen erfolgt vorzugsweise mit Hilfe des Rampenelements 175 eines der Anhänger 615 oder 630 oder eines der Lastkraftwagen 610, 625. Alternativ kann der zweite Anhänger 630 auch mittels der Seilwinde 180 auf den ersten Lastkraftwagen 610 gezogen werden. Weiter kann das Aufladen auch beispielsweise mittels einer fest installierten Rampe, eines Hebewerks oder eines Krans erfolgen.

In einem folgenden Schritt 645 wird der zweite Lastkraftwagen 625 auf den ersten Anhänger 615 aufgeladen. Dies erfolgt in ähnlicher Weise wie oben in Schritt 640 beschrieben vorzugsweise mittels einer Laderampe, insbesondere wieder des Rampenelements 175. Das Rampenelement 175 wird hierzu an ein hinteres Ende des ersten Anhängers 615 angelegt und der zweite Lastkraftwagen 625 fährt aus eigener Kraft über das Rampenelement 175 auf den ersten Anhänger 615. Vorzugsweise wird der zweite Lastkraftwagen 625 rückwärts auf den ersten Anhänger 615 gestellt, so dass der zweite Lastkraftwagen 625 mit der Achse, die seiner höchsten Stelle - dem Fahrerhaus - am nächsten ist, in die Vertiefung 165 einrastet, um die Gesamthöhe des ersten Anhängers 615 mit dem aufgeladenen zweiten Lastkraftwagen 625 möglichst gering zu halten.

In einem weiteren Schritt 650 wird der erste Anhänger 615 an den ersten Lastkraftwagen 610 angekoppelt. In einer anderen Ausführungsform erfolgt das Ankoppeln bereits vor dem Aufladen des zweiten Lastkraftwagens 625 auf den ersten Anhänger 615 im oben beschriebenen Schritt 645.

Falls erforderlich, werden außerdem noch der zweite Lastkraftwagen 625 auf der Ladefläche bzw. dem Aufbau 100 des ersten Anhängers 615 und der zweite Anhänger 630 auf der Ladeflächen bzw. dem Aufbau 100 des ersten Lastkraftwagens 610 fahrfertig gesichert. Das Rampenelement 175 wird entfernt und als Unterfahrschutz 175 seitlich an einem der Anhänger 615, 630 bzw. einem der Lastkraftwagen 610, 625 angebracht.

In einer Ausführungsform des Verfahrens 600 ist jedem Lastkraftwagen 610, 625 und jedem Anhänger 615, 630 jeweils eine Wechselbrücke oder ein vergleichbarer auswechselbarer Ladungsträger 190 zugeordnet. Die Wechselbrücken 190 können vor oder während der Durchführung des Verfahrens 600 so auf die den zweiten Lastzug 620 verteilt werden, dass alle vier Wechselbrücken 190 zusammen mit den aufeinander aufgeladenen Lastzügen 605, 620 transportiert werden können. Die Wechselbrücken können in beliebiger Weise zwischen dem zweiten Lastkraftwagen 625 und dem zweiten Anhänger 630 aufgeteilt sein, wobei vorzugsweise darauf geachtet wird, dass eine Gesamthöhe des beladenen ersten Lastzugs 605 unterhalb einer vorbestimmten Schwelle, beispielsweise 4m, bleibt.

Beide Lastzüge 620, 605 können nun gemeinsam zu einem Zielort gefahren werden, wozu nur ein einziger Fahrzeuglenker für den ersten Lastkraftwagen 610 erforderlich ist. Ein Fahrer des zweiten Lastzugs 620 kann in der Fahrerkabine des ersten Lastkraftwagens mitreisen. Am Zielort angekommen, kann der zweite Lastzug 620 vom ersten Lastzug 605 abgeladen werden, indem die angegebenen Schritte 635 bis 650 in umgekehrter Reihenfolge ausgeführt werden. Falls erforderlich, können mittransportierte Wechselbrücken 190 wieder auf die Nutzfahrzeuge 610, 615, 625, 630 verteilt werden.

In Variationen des Verfahrens 600 können die Rollen der beiden Lastkraftwagen 610 und 625 und/oder der Anhänger 615 und 630 jeweils vertauscht sein. Ferner kann die Rolle des zweiten Lastkraftwagens 625 mit der des zweiten Anhängers 630 vertauscht sein, so dass der zweite Lastkraftwagen 625 auf den ersten Lastkraftwagen 610 und der der zweite Anhänger 630 auf den ersten Anhänger 615 aufgeladen wird. Entscheidend für das in Figur 6 gezeigte Verfahren ist, dass der zweite Lastzug 620 vollständig auf den ersten Lastzug 610 aufgeladen wird, so dass Transportkosten für den zweiten Lastzug 620 beim Transport durch den ersten Lastzug 605 reduziert sind. So entsteht aus den beiden Lastzügen 605, 620 ein System 655 zum kostenreduzierten Transport von Gütern.

Das Verfahren 600 wird vorzugsweise beim unpaarigen Transport von Gütern vom Startort zum Zielort verwendet, indem zunächst Güter mittels der Lastzüge 605, 620 zum Startort des Schritts 635 transportiert und dort abgeladen werden. Die Güter werden vorzugsweise auf Ladungsträgern oder in Ladungsbehältern transportiert, die mittels der Verriegelungseinrichtungen 150 an den Lastkraftwagen 625, 610 bzw. Anhängern 630, 615 gesichert werden können. Nach dem Entladen wird am Startort der zweite Lastzug 620 auf den ersten Lastzug 605 aufgeladen und der erste Lastzug 605 wird zum Zielort gefahren, wo die beiden Lastzüge 605, 620 in der umgekehrten Reihenfolge der Schritte 635 bis 650 wieder voneinander abgeladen werden. Anschließend können beide Lastzüge 605, 620 neue Ladung aufnehmen und zum Startort von Schritt 635 transportieren.

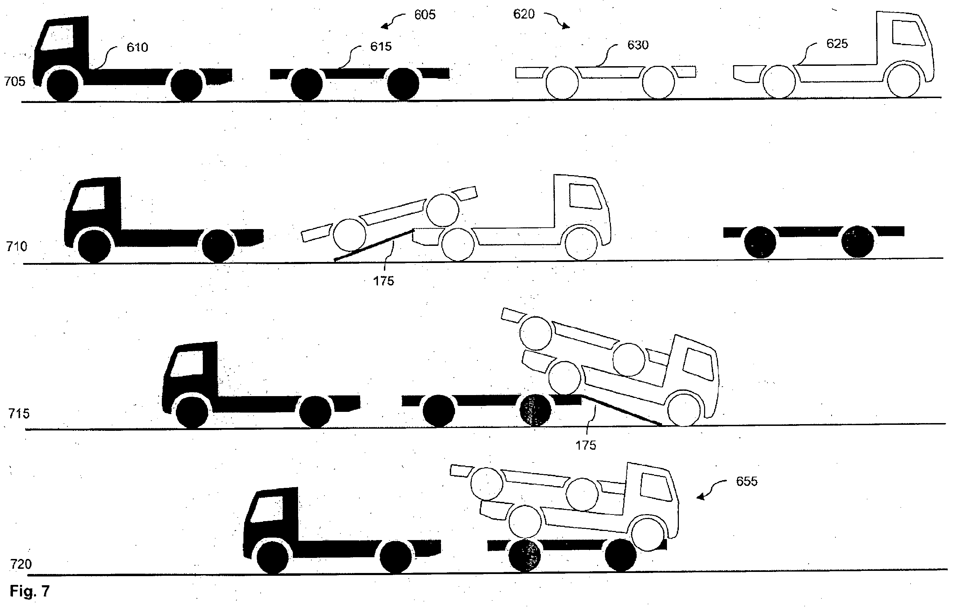

Figur 7 zeigt Schritte eines zweiten Verfahrens 700 zum Transportieren zweier Lastzüge 620, 605. Das Verfahren 700 verwendet die gleichen Voraussetzungen wie sie oben mit Bezug auf Figur 6 für das Verfahren 600 angegeben sind.

Ein erster Schritt 705 entspricht dem ersten Schritt 635 des Verfahrens 600 aus Figur 6.

In einem zweiten Schritt 710 wird zunächst der erste Anhänger 615 von dem ersten Lastkraftwagen 610 abgekoppelt und beiseite gestellt. Der zweite Anhänger 630 wird vom zweiten Lastkraftwagen 625 abgekoppelt und an den ersten Lastkraftwagen 610 angekoppelt. Mittels einer Laderampe, vorzugsweise des Rampenelements 175 aus Figur 1, einer fest installierten Rampe, einer Seilwinde 180 oder anderweitig wird der zweite Anhänger 630 auf den zweiten Lastkraftwagen 625 verbracht. Anschließend kann der zweite Anhänger 630 auf dem zweiten Lastkraftwagen 625 transportfertig gesichert werden.

In einem dritten Schritt 715 wird der zweite Lastkraftwagen 625 mit dem aufgeladenen zweiten Anhänger 630 auf den ersten Anhänger 615 verbracht, wobei der zweite Lastkraftwagen 625 vorzugsweise aus eigener Kraft auf den ersten Anhänger 615 auffährt. Dabei kann der erste Anhänger 615 bereits an den zweiten Lastkraftwagen 610 angekoppelt sein.

In einem vierten Schritt 720 wird der erste Anhänger 615 an den ersten Lastkraftwagen 610 angehängt. Gegebenenfalls wird auch das Rampenelement 175 vom Heck des ersten Anhängers 615 abgenommen und als Unterfahrschutz an einem der Anhänger 615, 630 bzw. einem der Lastkraftwagen 610, 625 angebracht. Optional kann der zweite Lastkraftwagen 625 noch auf dem ersten Anhänger 615 transportfertig gesichert werden.

Der zweite Lastzug 620 ist nun vollständig auf den ersten Lastzug 605 aufgeladen und der erste Lastzug 605 kann zum Zielort gefahren werden, wozu wieder nur ein einziger Fahrzeuglenker für den ersten Lastkraftwagen 610 erforderlich ist. Haben die Lastzüge 605, 620 den Zielort erreicht, so kann ein Abladen des zweiten Lastzugs 620 vom ersten Lastzug 605 entsprechend den Schritten 705 bis 720 in umgekehrter Reihenfolge erfolgen, bis die Lastzüge 620 und 605 voneinander getrennt bereitgestellt werden können.

Sind den Lastkraftwagen 610, 625 und/oder den Anhängern 615, 630 auswechselbare Ladungsträger 190 zugeordnet, so können diese wie im Verfahren 600 mittransportiert werden, beispielsweise gesammelt auf der Ladefläche des ersten Lastkraftwagens 610.

Die in den Verfahren 600 und 700 gezeigte Technik ist nicht auf Lastzüge aus jeweils einem Lastkraftwagen und einem Anhänger beschränkt, sondern kann auch mit Sattelzügen durchgeführt werden, die ebenfalls Nutzfahrzeuge im oben beschriebenen Sinn sind.

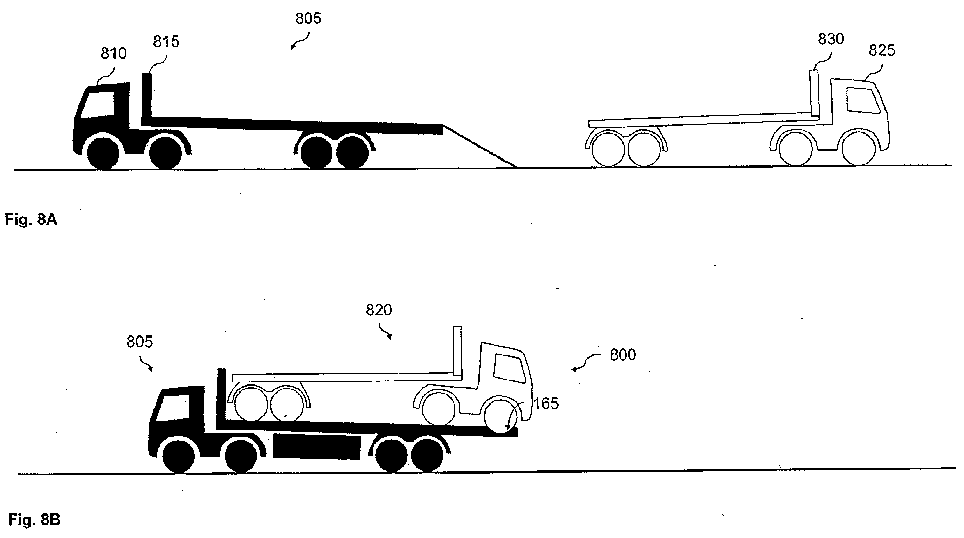

Figur 8 zeigt einen ersten Sattelzug 805 mit einer ersten Sattelzugmaschine 810 und einem ersten Sattelauflieger 815 sowie einen zweiten Sattelzug 820 mit einer zweiten Sattelzugmaschine 825 und einem zweiten Sattelauflieger 830. Wenigstens der erste Sattelauflieger 815 verfügt über einen Aufbau 105. Die Darstellung ist nicht maßstabsgetreu.

In Figur 8A sind die Sattelzüge 805 und 820 in einer ersten Phase des Beladens des zweiten Sattelzugs 820 mit dem ersten Sattelzug 805 und in Figur 8B in einer zweiten Phase des Beladens dargestellt. Figur 8A entspricht dem initialen Schritt 635 des Verfahrens 600, während Figur 8B dem finalen Schritt 650 entspricht. In Bezug auf die Erfindung nehmen die Sattelzugmaschinen 810 und 825 im Wesentlichen die Rollen der Lastkraftwagen 610 bzw. 625 und die Sattelauflieger 815 und 830 die der Anhänger 615 bzw. 630 ein.

Da die Ladefläche des Sattelaufliegers 815 ausreichend groß ist, kann der zweite Sattelzug 820 im Ganzen aufgeladen werden, also ohne den zweiten Sattelauflieger 830 von der zweiten Sattelzugmaschine 825 abzukoppeln. Vorzugsweise wird für das Aufladen wieder eine Rampe verwendet, insbesondere das Rampenelement 175. Das Abladen kann in entsprechender Weise erfolgen.

Vorzugsweise werden an allen Achsen des zweiten Sattelzugs 820 mit Ausnahme der Vorderachse Zwillingsreifen verwendet, um die oben mit Bezug auf Fig. 2 beschriebene Abstützung der Räder durch die inneren und äußeren Rollbahnen 215, 220 des Aufbaus 105 zu nutzen. So kann der zweite Sattelzug 820 problemlos und ohne ungewolltes Einrasten von Rädern einer Hinterachse auf den ersten Sattelauflieger 815 aufgeladen werden.

Der obere Sattelzug 820 kommt vorzugsweise so auf dem unteren Sattelzug 805 zu liegen, dass Vorderräder der zweiten Sattelzugmaschine 825 in den Vertiefungen 165 im Aufbau 105 des ersten Sattelaufliegers 815 einrasten. So kann wieder eine Gesamthöhe der beiden Sattelzüge 805, 820 unterhalb eines vorbestimmten Werts bleiben. Je nach Position der Vertiefungen 165 auf dem ersten Sattelauflieger 815 steht der zweite Sattelzug 820 in oder gegen die Fahrtrichtung auf dem ersten Sattelauflieger 815, vgl. die oben mit Bezug auf Fig. 2 beschriebenen Alternativen.

## Patentansprüche

1. Aufbau (105) zur Anbringung an einem Fahrgestell (115) eines ersten Nutzfahrzeugs (100), wobei der Aufbau (105) folgendes umfasst:
- eine Verriegelungseinrichtung (150) zur Befestigung eines auswechselbaren Ladungsträgers (190) am Aufbau (105);
- eine Aufnahme (155) zur Befestigung eines zweiten Nutzfahrzeugs (100) am Aufbau (105);
**gekennzeichnet durch**
- eine rechte und eine linke Rollbahn (160) in Fahrtrichtung zum Abstützen von Rädern (130, 140) an einer Achse (125, 135) des zweiten Nutzfahrzeugs (100) beim Auffahren auf das erste Nutzfahrzeug (100);
- wobei die Aufnahme (155) Vertiefungen (165) zur Aufnahme von Einzelreifen (130) einer Achse (125, 135) des zweiten Nutzfahrzeugs umfasst, und
- wobei jede Rollbahn (160) in Fahrtrichtung in eine innere (215) Rollbahn, die der Fahrzeugmitte zugewandt ist, und eine äußere Rollbahn (220), die der Fahrzeugmitte abgewandt ist, unterteilt ist,
- wobei die Vertiefungen (165) in den äußeren Rollbahnen (220) liegen, so dass Einzelreifen (130) des zweiten Nutzfahrzeugs (100) in die Vertiefungen (165) eintreten können, während Zwillingsreifen (140) des zweiten Nutzfahrzeugs (100) im Bereich der Vertiefungen (165) **durch** die inneren Rollbahnen (215) abgestützt sind.

2. Aufbau (105) nach Anspruch 1, wobei die Verriegelungseinrichtung eine Eckverriegelung (150) zur Befestigung eines ISO-Containers oder eines Wechselbehälters (190) umfasst.

3. Aufbau (105) nach einem der vorangehenden Ansprüche, wobei das zweiten Nutzfahrzeug (100) eine vorbestimmte Maximalhöhe aufweist und die Vertiefung (165) derart bemessen ist, dass eine Gesamthöhe des ersten Nutzfahrzeugs (100) zusammen mit dem auf dem Aufbau (105) angebrachten zweiten Nutzfahrzeug (100) eine vorbestimmte Höhe nicht übersteigt.

4. Aufbau (105) nach einem der vorangehenden Ansprüche, ferner umfassend eine Seilwinde (180) zum Ziehen des zweiten Nutzfahrzeugs (100) auf den Aufbau (105).

5. Aufbau (105) nach einem der vorangehenden Ansprüche, ferner umfassend einen seitlichen Unterfahrschutz (175), der dazu eingerichtet ist, vom Aufbau (105) abgenommen und als Rampenelement (175) zum Abstützen von Rädern (130, 140) des zweiten Nutzfahrzeugs (100) in einem Bereich zwischen dem ersten Nutzfahrzeug (100) und einer Umgebung zu werden, um ein Auffahren des zweiten Nutzfahrzeugs (100) auf das erste Nutzfahrzeug (100) zu erleichtern.

6. Verfahren (600, 700) zum Transportieren eines ersten Zugfahrzeugs (610, 805), eines ersten Anhängers (615, 815), eines zweiten Zugfahrzeugs (625, 825) und eines zweiten Anhängers (630, 830) von einem Startort zu einem Zielort, folgende Schritte umfassend:
- Aufladen (640) des zweiten Anhängers (630, 830) auf eines der Zugfahrzeuge (610, 805, 625, 825) oder den ersten Anhänger (615, 815) am Startort;
- Aufladen (645) des zweiten Zugfahrzeugs (625, 825) auf den ersten Anhänger (615, 815) am Startort,
- wobei das beladene Zugfahrzeug (610, 805, 625, 825) und der beladene erste Anhänger (615, 815) einen Aufbau (105) nach einem der vorangehenden Ansprüche aufweist;
- Fahren des ersten Zugfahrzeugs (610, 805) mit angehängtem erstem Anhänger (615, 815) vom Startort zum Zielort.

7. Verfahren (600, 700) nach Anspruch 6, wobei jedem Zugfahrzeug (610, 805, 625, 825) und jedem Anhänger (615, 815, 630, 830) jeweils eine Wechselbrücke (190) zugeordnet ist, ferner umfassend den Schritt des Aufladens der vier Wechselbrücken (190) auf das erste Zugfahrzeug (610, 805) und/oder den ersten Anhänger (615, 815) am Startort.

8. Verfahren (600, 700) nach Anspruch 6 oder 7, wobei der zweite Anhänger (630, 830) und/oder das zweite Zugfahrzeug (625, 825) einen Aufbau (105) nach einem der Ansprüche 1 bis 5 umfasst.

## Claims

1. Superstructure (105) for mounting on a chassis (115) of a first commercial vehicle (100), wherein the superstructure (105) comprises the following:
- a locking device (150) for fastening an interchangeable load carrier (190) to the superstructure (105);
- a retainer (155) for fastening a second commercial vehicle (100) to the superstructure (105);
**characterized by**
- a right and a left rolling path (160) in the direction of travel for supporting wheels (130, 140) on an axle (125, 135) of the second commercial vehicle (100) when the latter is driven up onto the first commercial vehicle (100);
- wherein the retainer (155) comprises depressions (165) for receiving individual tyres (130) of an axle (125, 135) of the second commercial vehicle, and
- wherein each rolling path (160) is divided in the direction of travel into an inner rolling path (215) which faces the centre of the vehicle, and an outer rolling path (220) which faces away from the centre of the vehicle,
- wherein the depressions (165) are located in the outer rolling paths (220) such that individual tyres (130) of the second commercial vehicle (100) can enter the depressions (165) while twin tyres (140) of the second commercial vehicle (100) are supported in the region of the depressions (165) by the inner rolling paths (215).

2. Superstructure (105) according to claim 1, wherein the locking device comprises a corner lock (150) for the fastening of an ISO container or an interchangeable container (190).

3. Superstructure (105) according to either of the preceding claims, wherein the second commercial vehicle (100) has a predetermined maximum height and the depression (165) is dimensioned in such a manner that an overall height of the first commercial vehicle (100) together with the second commercial vehicle (100) mounted on the super-structure (105) does not exceed a predetermined height.

4. Superstructure (105) according to one of the preceding claims, furthermore comprising a cable winch (180) for pulling the second commercial vehicle (100) onto the superstructure (105).

5. Superstructure (105) according to one of the preceding claims, furthermore comprising a lateral underride protector (175) which is designed to be removed from the superstructure (105) and to be as a ramp element (175) for supporting wheels (130, 140) of the second commercial vehicle (100) in a region between the first commercial vehicle (100) and a surroundings, in order to make it easier for the second commercial vehicle (100) to be driven up onto the first commercial vehicle (100).

6. Method (600, 700) for transporting a first towing vehicle (610, 805), a first trailer (615, 815), a second towing vehicle (625, 825) and a second trailer (630, 830) from a starting location to a target location, comprising the following steps:
- loading (640) the second trailer (630, 830) onto one of the towing vehicles (610, 805, 625, 825) or onto the first trailer (615, 815) at the starting location;
- loading (645) the second towing vehicle (625, 825) onto the first trailer (615, 815) at the starting location,
- wherein the loaded towing vehicle (610, 805, 625, 825) and the loaded first trailer (615, 815) have a superstructure (105) according to one of the preceding claims;
- driving the first towing vehicle (610, 805) with first trailer (615, 815) attached from the starting location to the target location.

7. Method (600, 700) according to Claim 6, wherein each towing vehicle (610, 805, 625, 825) and each trailer (615, 815, 630, 830) is in each case assigned a swap body (190), furthermore comprising the step of loading the four swap bodies (190) onto the first towing vehicle (610, 805) and/or onto the first trailer (615, 815) at the starting location.

8. Method (600, 700) according to Claim 6 or 7, wherein the second trailer (630, 830) and/or the second towing vehicle (625, 825) comprises a superstructure (105) according to one of Claims 1 to 5.

## Revendications

1. Superstructure (105) à poser sur un châssis (115) d'un premier véhicule utilitaire (100), dans laquelle la superstructure (105) comprend ce qui suit:
- un dispositif de verrouillage (150) pour la fixation d'un support de charge interchangeable (190) sur la superstructure (105);
- un logement (155) pour la fixation d'un deuxième véhicule utilitaire (100) sur la superstructure (105);
**caractérisée par**:
- une voie de roulage droite et gauche (160) dans la direction de roulage pour supporter des roues (130, 140) sur un essieu (125, 135) du deuxième véhicule utilitaire (100) lors de la montée sur le premier véhicule utilitaire (100);
- dans laquelle le logement (155) comprend des creux (165) destinés à recevoir les pneus individuels (130) d'un essieu (125, 135) du deuxième véhicule utilitaire, et
- dans laquelle chaque voie de roulage (160) est divisée, dans la direction de roulage, en une voie de roulage intérieure (215), qui est proche du milieu du véhicule, et une voie de roulage extérieure (220), qui est éloignée du milieu du véhicule,
- dans laquelle les creux (165) sont situés dans les voies de roulage extérieures (220), de telle manière que des pneus individuels (130) du deuxième véhicule utilitaire (100) puissent s'engager dans les creux (165), tandis que des pneus jumelés (140) du deuxième véhicule utilitaire (100) sont soutenus dans la région des creux (165) par les voies de roulage intérieures (215).

2. Superstructure (105) selon la revendication 1, dans laquelle le dispositif de verrouillage comprend un verrouillage d'angle (150) pour la fixation d'un conteneur ISO ou d'un récipient échangeable (190).

3. Superstructure (105) selon l'une quelconque des revendications précédentes, dans laquelle le deuxième véhicule utilitaire (100) présente une hauteur maximale prédéterminée et le creux (165) est dimensionné de telle manière qu'une hauteur totale du premier véhicule utilitaire (100) y compris le deuxième véhicule utilitaire (100) posé sur la superstructure (105) ne dépasse par une hauteur prédéterminée.

4. Superstructure (105) selon l'une quelconque des revendications précédentes, comprenant en outre un treuil à câble (180) pour tirer le deuxième véhicule utilitaire (100) sur la superstructure (105).

5. Superstructure (105) selon l'une quelconque des revendications précédentes, comprenant en outre une protection latérale contre un encastrement (175), qui est conçue pour être enlevée de la superstructure (105) et être comme élément de rampe (175) pour supporter des roues (130, 140) du deuxième véhicule utilitaire (100) dans une région comprise entre le premier véhicule utilitaire (100) et un entourage, afin de faciliter une montée du deuxième véhicule utilitaire (100) sur le premier véhicule utilitaire (100).

6. Procédé (600, 700) pour transporter un premier véhicule tracteur (610, 805), une première remorque (615, 815), un deuxième véhicule tracteur (625, 825) et une deuxième remorque (630, 830) d'un lieu de départ à un lieu de destination, comprenant les opérations suivantes:
- charger (640) la deuxième remorque (630, 830) sur un des véhicules tracteurs (610, 805, 625, 825) ou sur la première remorque (615, 815) au lieu de départ;
- charger (645) le deuxième véhicule tracteur (625, 825) sur la première remorque (615, 815) au lieu de départ;
- dans lequel le véhicule tracteur chargé (610, 805, 625, 825) et la première remorque chargée (615, 815) présentent une superstructure (105) selon l'une quelconque des revendications précédentes;
- conduire le premier véhicule tracteur (610, 805) avec la première remorque accrochée (615, 815) du lieu de départ au lieu de destination.

7. Procédé (600, 700) selon la revendication 6, dans lequel un pont interchangeable (190) est respectivement associé à chaque véhicule tracteur (610, 805, 625, 825) et à chaque remorque (615, 815, 630, 830), comprenant en outre l'opération de chargement des quatre ponts interchangeables (190) sur le premier véhicule tracteur (610, 805) et/ou sur la première remorque (615, 815) au lieu de départ.

8. Procédé (600, 700) selon la revendication 6 ou 7, dans lequel la deuxième remorque (630, 830) et/ou le deuxième véhicule tracteur (625, 825) comprend une superstructure (105) selon l'une quelconque des revendications 1 à 5.
